## Europäisches Patentamt

## European Patent Office

## Office européen des brevets

(19)

(11) Veröffentlichungsnummer: **0 029 632**
**B1**

(12)

# EUROPÄISCHE PATENTSCHRIFT

(45) Veröffentlichungstag der Patentschrift:
10.07.85

(51) Int. Cl.⁴: **F 16 L 59/16**

(21) Anmeldenummer: **80201126.2**

(22) Anmeldetag: **27.11.80**

(54) Verfahren zum Verbinden mediumführender, vorisolierter Rohrstücke und durch dieses Verfahren verbundene Rohrstücke.

(30) Priorität: **27.11.79 NL 7908598**

(43) Veröffentlichungstag der Anmeldung:
**03.06.81 Patentblatt 81/22**

(45) Bekanntmachung des Hinweises auf die Patenterteilung:
**10.07.85 Patentblatt 85/28**

(84) Benannte Vertragsstaaten:
**AT BE CH DE FR GB LI NL SE**

(56) Entgegenhaltungen:
**CH - A - 585 367**
**GB - A - 1 435 695**
**GB - A - 1 483 143**
**US - A - 3 157 204**
**US - A - 3 289 704**
**US - A - 3 744 823**
**US - A - 3 801 140**

(73) Patentinhaber: **Dürotan Fjernvarmeroer A/S, Brovadvej - Erritso, DK-7000 Fredericia (DK)**

(72) Erfinder: **Putman, Antonius Theodorus B., Rooseveltlaan 5, NL-5242 AA Rosmalen (NL)**

(74) Vertreter: **Hoorweg, Petrus Nicolaas et al, OCTROOIBUREAU ARNOLD & SIEDSMA Sweelinckplein 1, NL-2517 GK The Hague (NL)**

## Beschreibung

Die Erfindung betrifft ein Verfahren zum Verbinden mediumführender, vorisolierter Rohrstücke, mit durch ein Mantelrohr geschützter Isolierung, wobei die Isolierung und das Mantelrohr über eine bestimmte Gesamtlänge (A) von jedem Rohrende ab zunächst entfernt und danach die Rohrstücke in üblicher Weise zusammengeschweißt werden.

Die erfindungsgemäß herzustellenden Verbindungen dienen insbesondere für isolierte Rohre für Untergrund Warmwasserförderung. Die Verbindung der Rohrstücke muß daher eine Anzahl von Anforderungen erfüllen wie ausreichende Widerstandsfähigkeit gegen äußere Belastung und Wasserdichtheit, da das Grundwasser die Isolierung und nachher das mediumführende Kernrohr angreifen könnte.

Es ist aus der GB-A-1 483 143 bekannt, an der Verbindungsstelle Überwurfmuffen anzubringen, die größer sind als der Außendurchmesser des Außenmantels und die mit Hilfe von Schrumpfmuffen an diesem Mantel befestigt werden. Es hat sich ergeben, daß diese Schrumpfmuffen einer axialen Verformung und Belastung infolge Temperaturschwankungen und-oder Setzungen nicht widerstandsfähig sind.

Die Erfindung bezweckt, ein Verfahren zu schaffen, durch das eine solche Verbindung zwischen den vorher isolierten Rohrstücken hergestellt werden kann, derart daß die vorher erwähnten Anforderungen in bezug auf mechanische Festigkeit und Dichtung erfüllt werden.

Das Verfahren nach der Erfindung unterscheidet sich dadurch, daß mit der Länge A übereinstimmende teilzylindrische schalenförmige Isolierungs- und Mantelteile vorgeformt und die Ränder der Mantelteile und diejenigen der Mantelrohre durch Abschrägen vorbearbeitet werden, damit nach Anordnung der vorbearbeiteten Teile die Ränder durch Schweißen aneinander verbunden werden.

Beim Schweißen (Auftragsschweißen) wird neues Material der Schweißfuge zugeführt und durch Wärme mit dem Basismaterial verschmolzen, bis es mit dem Muttermaterial einheitlich ist. Dank der Schweiße ergibt sich auch an der Verbindungsstelle ein glatter Außenmantel, wodurch zusätzliche Belastung infolge (passiven) Grunddrucks bei der geringsten axialen Bewegung des Rohres auf einen Mindestwert herabgesetzt wird.

Aus der US-A-3 157 204 ist auch ein Verfahren zur Isolierung von Rohren bekannt, jedoch handelt es sich hier nicht um in einer Werkstätte vorisolierte Rohre. Die Isolierstücke mit bestimmter Länge werden »in situ« auf das Rohr geschoben, derart, daß die Rohrenden frei bleiben. Danach werden die Rohrenden aneinander geschweißt und werden die Rohrenden nachträglich mit Isolierstoff bedeckt. Es gibt hier keine Schweißdichtung des Außenmantels, aber einen mit der Hand aufzubringenden Glasfibermantel.

Vorzugsweise werden die Schweißränder zu verbindenden Teile vorbearbeitet, daß eine V-Schweißnaht hergestellt werden kann.

Zum Erzielen einer spannungsfreien Umfangsnaht schlägt die Erfindung vor, zunächst die Längsschweiße und darauf die Umfangsschweiße zwischen den verschiedenen Teilen zu machen.

Die Erfindung bezieht sich ferner auf isolierte, mediumführende Rohrstücke, die durch das vorerwähnte Verfahren miteinander verbunden sind, wobei die Rohrstücke sich dadurch kennzeichnen, daß die Längsschweißen in der in bezug auf die Belastung neutralen Ebene liegen.

Zur Erzielung einer einwandfreien Schweißnaht wird nach der Erfindung vorgeschlagen, daß die Schweißnaht eine Voröffnung von 1 bis 1,5 mm aufweist, und der Öffnungswinkel der Naht 65° beträgt.

Die Erfindung wird nachstehend an Hand der Figuren näher erläutert. In der Zeichnung zeigt

Fig. 1 eine Seitenansicht einer erfindungsgemäß hergestellten Verbindung zwischen isolierten Rohrenden,

Fig. 2 einen Schnitt längs der Linie II-II in Fig. 1,

Fig. 3 eine Seitenansicht einer T-Verbindung, die Fig. 4, 5 und 6 verschiedene Ausführungsformen von Schweißnähten.

In den Figuren bezeichnet die Bezugsziffer 1 das mediumführende Kernrohr, um das eine Isolierung 2 angebracht ist. Die Isolierung an sich wird von einem Mantelrohr 3 geschützt.

Zum Verbinden der Rohre müssen nicht nur die Kernrohrstücke 1 durch eine übliche Schweiße miteinander verbunden werden, sondern auch die Mantelrohre 3, um die Isolierung 2 auch an der Verbindungsstelle ausreichend zu schützen.

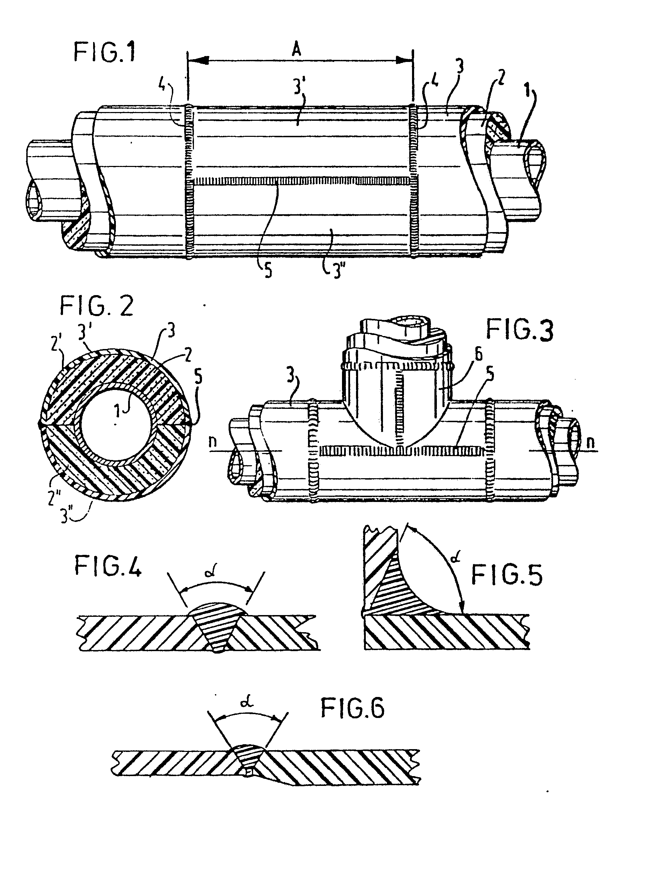

Zur Herstellung der Verbindung werden zunächst in einem bestimmten Abstand von den Rohrenden der Rohrmantel 3 und die Isolierung 3 derart entfernt, daß ein Abstand A zwischen den Mantelrohrstücken frei bleibt. Darauf werden die Isolier-Schalenteile 2' und 2'' um die vorher zusammengeschweißten Kernrohrstücke 1 angebracht (siehe Fig. 2), sowie zwei Mantel-Schalenteile 3' und 3''·

Zum Verbinden der Schalenteile mit dem Mantelrohr bzw. aneinander kann eine Extrusionslängsschweiße 5 und darauf eine Umfangsschweiße 4 angebracht werden. Dazu sollen die Schweißränder durch Abschrägen vorbearbeitet werden, so daß eine V-Schweißnaht (siehe Fig. 2) erhalten wird.

Aus den Figuren geht deutlich hervor, daß ein glatter, ununterbrochener Mantel erhalten wird, so daß keine zusätzlichen Belastungen infolge Bodendruck oder Setzung auf das Mantelrohr 3 auftreten können.

Fig. 3 zeigt eine T-Verbindung, wobei einer der Schalenteile des Außenmantels mit einem Abzweigstoppteil 6 versehen ist und die Verbindung ferner in der vorstehend beschriebenen Weise hergestellt wird.

Vorzugsweise soll die Längsnaht 5 auf der neutralen Linie n-n in bezug auf die Biegebelastung liegen.

Die Fig. 4, 5 und 6 zeigen verschiedene Ausführungsformen von Schweißnähten außer der in Fig. 2 dargestellten V-Naht.

Fig. 5 zeigt eine Winkelschweiße und Fig. 6 eine V-Naht zwischen Teilen verschiedener Wandstärken. Die Schweißnaht hat vorzugsweise eine Voröffnung von 1 bis 1,5 mm, wobei der Öffnungswinkel $\alpha$ vorzugsweise 65° beträgt. Die dargestellten Ausführungsformen zeigen deutlich, daß zusätzliches Material zugeführt wird, wodurch es möglich ist, ohne Verschiebung des Außenmantels 3 in bezug auf das Kernrohr 1 eine dichte Verbindung zwischen den Schalenteilen 3′ und 3″ um die Verbindung herum herzustellen.

**Patentansprüche**

1. Verfahren zum Verbinden mediumführender, vorisolierter Rohrstücke (1) mit durch ein Mantelrohr (3) geschützter Isolierung (2), wobei die Isolierung (2) und das Mantelrohr (3) über eine bestimmte Gesamtlänge (A) von jedem Rohrende ab zunächst entfernt und danach die Rohrstücke (1) in üblicher Weise zusammengeschweißt werden, dadurch gekennzeichnet, daß mit der Länge A übereinstimmende teilzylindrische schalenförmige Isolierungs- und Mantelteile (2′, 2″, 3′, 3″) vorgeformt und die Ränder der Mantelteile und diejenigen der Mantelrohre durch Abschrägen vorbearbeitet werden, damit nach Anordnung der vorbearbeiteten Teile die Ränder durch Schweißen (4, 5) aneinander verbunden werden.

2. Verfahren nach Anspruch 1, dadurch gekennzeichnet, daß als Schweiße zwischen den Mantelteilen (3′) und dem Mantelrohr (3) eine V-Schweißnaht verwendet wird.

3. Verfahren nach Ansprüchen 1 und 2, dadurch gekennzeichnet, daß nach dem Anbringen der Längsschweißen (5) die Umfangsschweißen (4) gemacht werden.

4. Isolierte, mediumführende Rohrstücke die durch das Verfahren nach Ansprüchen 1 bis 4 miteinander verbunden sind.

5. Isolierte, mediumführende Rohrstücke, dadurch gekennzeichnet, daß die Längsschweißen (5) in der in bezug auf die Belastung neutralen Ebene liegen.

6. Isolierte, mediumführende Rohrstücke nach Anspruch 5, dadurch gekennzeichnet, daß die Schweißnaht eine Voröffnung von 1 bis 1,5 mm aufweist und der Öffnungswinkel der Naht 65° beträgt.

**Claims**

1. A process for joining pre-insulated medium-bearing pipe sections (1) having an insulation (2) which is protected by a shell pipe (3) wherein at first the insulation (2) and the shell pipe (3) are removed from each pipe end along a predetermined overall length (A) and then the pipe sections (1) are ordinarily welded together, characterized in that part-cylindrical dished insulation and shell pieces (2′, 2″, 3′ 3″) corresponding to the length A are preformed and the edges of the shell pieces and those of the shell pipe are prepared by sloping to join together the edges by welds (4, 5) after arranging the prepared pieces.

2. A process according to claim 1, characterized in that a V-weld is used as the weld between the shell pieces (3′) and the shell pipe (3).

3. A process according to claims 1 and 2, characterized in that the circumferential welds (4) are made after making the longitudinal welds (5).

4. Insulated medium-bearing pipe sections which are joined by the process according to claims 1 to 3.

5. Insulated medium-bearing pipe sections, characterized in that the longitudinal welds (5) are located in the neutral plane with respect to the load.

6. Insulated medium-bearing pipe sections according to claim 5, characterized in that the weld comprises a pre-opening from 1 to 1,5 mm and that the included angle of the weld is 65°.

**Revendications**

1. Procédé pour joindre des tronçons de conduites de transport pré-isolés (1) avec isolation (2) protégée par une gaine (3) dans lequel l'isolation (2) et la gaine (3) sont d'abord éloignées de chaque extrémité de conduite, d'une longueur totale (A) déterminée les tronçons de conduites étant ensuite soudés entre eux de façon classique, caractérisé en ce que les parties d'isolation (2′, 2″) et de gaine (3′, 3″) en forme de coquilles partiellement cylindriques ayant la longueur (A) sont préformées, et les bords des parties de gaine et ceux des gaines sont pré-usinés par chanfreinage de manière que après positionnement des parties préusinées, les bords soient liés entre eux par des soudures (4, 5).

2. Procédé selon la revendication 1, caractérisé en ce qu'un cordon de soudure en forme de V est utilisé comme soudure entre les parties de gaine (3′) et la gaine (3).

3. Procédé selon la revendication 1 ou 2, caractérisé en ce que les soudures circonférentielles (4) sont faites après la réalisation des soudures (5) longitudinales.

4. Tronçons de conduites de transport isolés, caractérisés en ce qu'ils sont liés par le procédé selon les revendications 1 à 3.

5. Tronçons de conduites de transport isolés, caractérisés en ce que les soudures longitudinales (5) se trouvent dans le plan neutre par rapport à la charge.

6. Tronçons de conduites de transport isolés selon la revendication 5, caractérisés en ce que le cordon de soudure comporte une ouverture préalable de 1 à 1,5 mm et l'angle d'ouverture du cordon a une valeur de 65°.

FIG.1

FIG. 2

FIG.3

FIG.4

FIG.5

FIG.6

5